# EUROPEAN PATENT APPLICATION

(11) **EP 4 712 405 A1**
(43) Date of publication of application: **18.03.2026**
(21) Application number: 24306498.7
(22) Date of filing: 12.09.2024
(51) Int. Cl.: H04L 9/08, H04L 9/32

(54) **SECURE PROVISIONING OF DATA IN AN ENCLAVE OF A CLOUD SERVER**

(71) Applicant: THALES DIS FRANCE SAS, 92190 Meudon (FR)
(72) Inventor: SALOU, Florent, 13100 Le Tholonet (FR); LACOUTURE, Dominique, 83470 Seillons Source d'Argens (FR); LAMBERT, Patrick, 13010 Marseille (FR)
(74) Representative: Grevin, Emmanuel

(57) **Abstract**

The invention provides a method of securely provisioning data from a security module to an enclave of a cloud server via a telecommunications network. The method comprising the following steps:
- verifying (314-316) an attestation received from the enclave, the attestation comprising an enclave public key associated with the enclave;
- in case of positive verification of the attestation, generating (317) a session key;
- encrypting (319) the session key using the enclave public key;
- transmitting (321) the encrypted session key to the enclave.

The method further comprises :
- encrypting data stored in the security module using the session key;
- transmitting the encrypted data to the enclave.

## Description

This invention is related to the field of provisioning data to in a cloud service enclave, to offload a service provided by a security module.

The invention is useful in particular, but not exclusively, to offload a service comprising cryptographic computations based on one or several cryptographic keys.

Hardware Security Modules, HSM, are used to securely store sensitive data and to perform operations based on this data, so as to provide one or several functionalities or services.

The functionalities that can be provided by an HSM are constrained by fixed features of the HSM such as memory and processor capabilities.

On the one hand, implementing high performance processors and/or memory in a set of HSM is costly. On the other hand, underestimating the capabilities required by the HSM to perform some functionalities may lead to a high latency during execution, or may render some functionalities unfeasible by the HSM.

There is therefore a lack of flexibility or scalability in the fixed capabilities of HSMs, which may lead to a very high price of these HSMs (when the fixed capabilities are overestimated), or to a high latency when performing complex operations or to make impossible some operations (when the fixed capabilities are underestimated).

To overcome this lack of scalability, cloud services are provided, which enable to offload functionalities of hardware devices in remote enclaves of cloud servers.

An enclave is a virtual machine implemented on a cloud server, with its own kernel, memory and processor. The memory and processor of a parent instance is therefore partitioned in several enclaves, which may be used by separate organizations to offload applications and data that were previously used on HSMs to provide some functionalities.

However, some security functionalities performed by HSMs are based on sensitive data, and the enclave needs to be trusted by the HSM before provisioning sensitive data in the enclave.

To be trusted, the organization providing the HSMs has to make sure that:
- the HSM may authenticate the enclave before transferring data to it;
- eavesdropping is not possible between the enclave and the HSM;
- the infrastructure of the cloud service can be trusted;
- the enclave can safely communicate with a client of the organization, to allow the client to benefit from the externalized functionalities. This involves that eavesdropping is not possible between the client and the enclave;
- the hypervisor in charge of the cloud service is not able to alter the communications between the enclave and the HSM.

There is therefore a need to provide a solution for safely provisioning data from a security module to an enclave of a cloud server.

The invention aims at improving the situation.

A first aspect of the invention concerns a method of securely provisioning data from a security module to an enclave of a cloud server via a telecommunications network, the method comprising the following steps:
- verifying an attestation received from the enclave, the attestation comprising an enclave public key associated with the enclave;
- in case of positive verification of the attestation, generating a session key;
- encrypting the session key using the enclave public key;
- transmitting the encrypted session key to the enclave.
The method further comprises :
- encrypting data stored in the security module using the session key;
- transmitting the encrypted data to the enclave.

Therefore, the invention enables the security module to verify an attestation of the enclave before sharing a session key with the enclave. The data that is provisioned in the enclave is encrypted using the session key, so that eavesdropping or alteration of the data is not permitted. As the session key itself is shared in an encrypted way between the enclave and the security module, a secure bootstrapping phase can be implemented between the enclave and the security module, allowing to implement a secure data provisioning phase.

According to some embodiments, the data may comprise at least one cryptographic key stored in the security module.

Cryptographic computations based on one or several cryptographic keys, which may be requiring much processor and memory capabilities, can therefore be externalized by security modules to enclaves, in a secure way.

According to some embodiments, the method may comprise:
- receiving an encrypted data request from the enclave;
- decrypting the encrypted data request using the session key;
- retrieving data stored in the security module based on the data request, wherein the data retrieved may be encrypted using the session key and transmitted to the enclave in a response to the data request.

Therefore, only the data that is requested by the enclave (to provide a service to some clients for example) is provisioned in the enclave, which enables to reduce the quantity of data exchanged in the telecommunications network and to enhance the security associated with the data that is securely stored by the security module.

In complement, the data request may further comprise a nonce, and the security module may generate the response comprising the nonce and the retrieved data, may encrypt the response using the session key and may transmit the encrypted response to the enclave.

This enables the enclave to verify that the response corresponds to the data request previously transmitted to the security module, which reinforces the security associated with the storage of data in the enclave.

Alternatively or in complement, the data request may comprise a timestamp and the security module may verify that the timestamp is inside a time range before transmitting the response to the enclave.

Using a timestamp enables to protect the provisioning of data against replay attacks.

According to some embodiments, verifying the attestation may comprise one or several of the following verifications:
- verifying a signature of the attestation based on a root of trust certificate associated with an entity related to the cloud server;
- verifying that an enclave identifier included in the attestation is comprised in an identifier list stored in the security module; and
- verifying a signature of an enclave image file comprised in the attestation.

This enables to strongly authenticate the enclave, based on several factors, before sharing a session key with the enclave.

According to some embodiments, the security module may sign the encrypted session key using a private key of the security module, before transmitting the encrypted session key to the enclave.

This enables the enclave to verify the origin and integrity of the encrypted session key.

According to some embodiments, the method may further comprise:
- receiving a Transport Layer Security, TLS, keypair request from the enclave;
- retrieving a TLS keypair;
- encrypting the TLS keypair using the session key;
- transmitting the encrypted TLS keypair to the enclave.

This enables the enclave to start an application server based on the TLS keypair. Some of the functionalities of the security module can therefore be executed between the enclave and a client directly, in a secure manner. Using TLS prevents eavesdropping between the client and the enclave.

According to some embodiments, the method may further comprise, before receiving the attestation:
- receiving a random request from the enclave;
- generating a random by the security module;
- signing the random using a private key of the security module; and
- transmitting the signed random to the enclave.

Such a random enables the security module to participate to the bootstrapping process of the enclave. In particular, the random can be used to seed a random number generator.

In complement, the enclave may seed a random number generator based on the random and the enclave may generate an enclave asymmetrical key pair based on the random number generator, the asymmetrical key pair comprising the enclave public key.

This enables to reinforce the security associated with the generation of the asymmetrical key pair of the enclave.

According to some embodiments, upon reception of the encrypted session key, the enclave may decrypt the encrypted session key based on an enclave private key associated with the enclave. Upon reception of the encrypted data, the enclave may decrypt the encrypted data based on the session key. The method may further comprise:
- receiving a service request, by the enclave, from a client;
- determining a service response to the service request, based on the decrypted data;
- transmitting the service response to the client.

The enclave can therefore provide some of the functionalities of the security module, based on the data that has been securely provisioned to it.

In complement, the service request may request a cryptographic computation based on the cryptographic key, the enclave may perform the cryptographic computation based on the cryptographic key, and the response may comprise a result of the cryptographic computation.

Offloading of cryptographic computations enable to reduce the memory and processor constraints on the security modules.

Alternatively or in complement, the enclave may establish a TLS session with the client using the TLS keypair, and the service request may be received by the enclave during the TLS session.

This enables to securely provide the service to the client, based on the data securely provisioned in the enclave.

A second aspect of the invention concerns a computer program comprising instructions arranged for implementing the method according to the first aspect of the invention, when said instructions are executed by a processor.

A third aspect of the invention concerns a security module comprising a network interface configured for accessing a telecommunications network, and a processor configured for:
- verifying an attestation received from an enclave of a cloud server, via the telecommunications network, the attestation comprising an enclave public key associated with the enclave;
- in case of positive verification of the attestation, generating a session key;
- encrypting the session key using the enclave public key;
- transmitting the encrypted session key to the enclave via the network interface and the telecommunications network.
The processor is further configured for:
- encrypting data stored in the security module using the session key;
- transmitting the encrypted data to the enclave via the network interface and the telecommunications network.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### Brief description of the drawings:

[Fig. 1] shows a system for securely provisioning data from a security module to an enclave of a cloud server, according to some embodiments of the invention;
[Fig. 2] illustrates the steps of an enclave building phase of a method for securely provisioning data on an enclave of a cloud server, according to some embodiments of the invention;
[Fig. 3] illustrates the steps of a bootstrapping phase of a method for securely provisioning data on an enclave of a cloud server, according to some embodiments of the invention;
[Fig. 4] illustrates the steps of a data provisioning phase of a method for securely provisioning data on an enclave of a cloud server, according to some embodiments of the invention;
[Fig. 5] illustrates the steps of a service delivery phase of a method for securely provisioning data in an enclave according to some embodiments of the invention;
[Fig. 6] illustrates a structure of a hardware security module, according to some embodiments of the invention.

### Detailed description

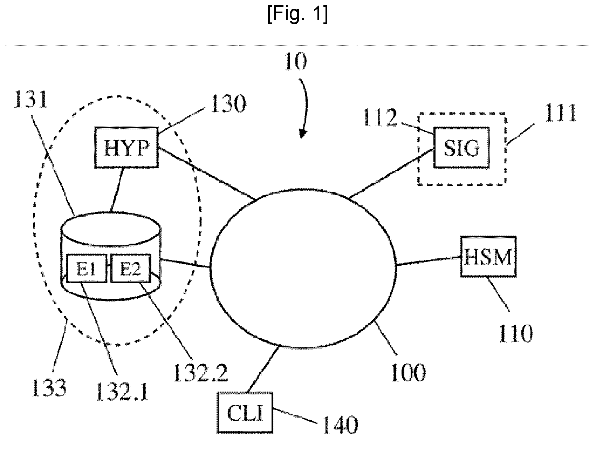

Figure 1 shows a system 10 for securely providing data to an enclave of a cloud server 131, according to some embodiments of the invention.

The system 10 comprises an extended network 100, such as an IP network, arranged for interconnecting the entities of the system 10.

The IP network can be accessed via a mobile access network, via any mobile technology such as 3G, 4G, 5G, for example, or via a local access network, such as a Wi-Fi network.

The system further comprises a security module 110, called Hardware Security Module, HSM, in what follows. The HSM 110 is configured to provide a secure service to a client 140 based on data that is stored in the HSM 110. The data stored by the HSM may comprise cryptographic keys associated with the client 140, and the secure service comprise cryptographic computations based on the cryptographic keys. As explained previously, it is preferable that cryptographic computations performed for the client 140 are delegated to an entity that is external to the HSM 110. Although a single client is shown on figure 140, the secure service provided by the HSM 110 may be mutualized between a plurality of clients.

The example of a secure service that comprise cryptographic computations based on data being cryptographic keys is given for illustrative purposes and is not restricting the invention. The invention may also apply to other secure services that are based on data that can be stored in the HSM 110 and securely provisioned in an enclave. For example, the HSM may store Personal Identifier Information, PII, Associated with a user of the client 140.

To this end (to delegate the secure service), the system 10 further comprise a cloud enclave service 133 provided by a hypervisor 130 associated with a cloud server 131 comprising one or several enclaves. In the example shown on figure 1, the cloud server 131 comprises a first enclave 132.1 and a second enclave 132.2. However, no restriction is attached to the number of enclaves of the cloud server 131.

In what follows, it is considered that the first enclave 132.1 is created based on an enclave image file created by an enclave image generation module 112 associated with the HSM 110. In particular, the enclave image generation module 112 may be associated with the organization providing the secure service implemented by the HSM 110. Preferably, the enclave image generation module 112 can create and sign the enclave file in an offline environment 111, which enables to improve the security associated with the creation and signature of the enclave image file.

No restriction is attached to the enclave image generation module 112, which may be a security module, such as a Hardware Security Module. The enclave image generation module 112 is preferably distinct from the HSM 110, but they may be one and the same module according to some embodiments.

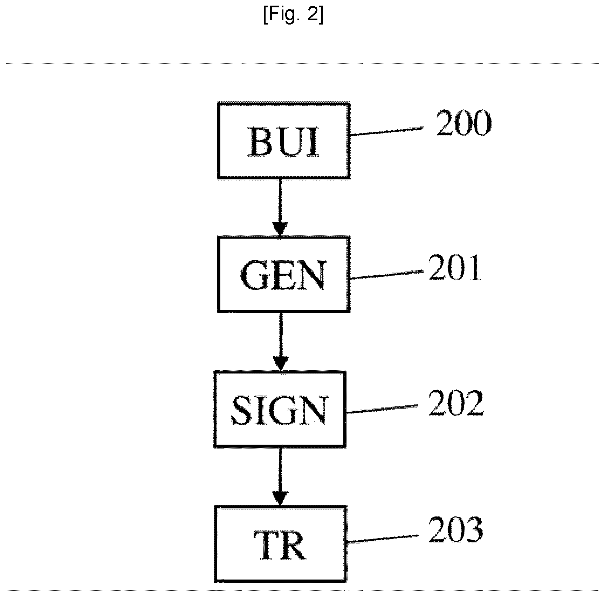

The enclave image generation module 112 is configured to implement the steps of a building phase of a method for securely provisioning data to an enclave, according to some embodiments of the invention, illustrated on figure 2.

Referring to figure 2, at a step 200, the enclave image generation module 112 builds an enclave application. According to the invention, the enclave application is configured to execute at least a part of the secure service or functionalities implemented by the HSM 110. For example, the enclave application may be configured to perform cryptographic computations based on one or several keys to be obtained during or before execution of the enclave application.

The enclave application is therefore built to externalize some of the functionalities of the HSM 100 in the cloud server 131.

At a step 201, the enclave generation module 112 generates an enclave image file based on the enclave application built at step 200. No restriction is attached to the format of the enclave image file, which may be an .eif format for example. The enclave image file comprises information that is necessary to execute the enclave application in an enclave of the cloud server 131.

According to the invention, the enclave image file may comprise:
- a public key ASYM_HSM_PUB of the HSM 110. The public key ASYM_HSM_PUB is part of an asymmetrical key pair, which also comprises a private key ASYM_HSM_PUB owned by the HSM 110 only;
- a certificate ORG_CA issued by a certificate authority of the organization associated with the HSM 110 and the enclave image generation module 112.

At a step 202, the enclave image generation module 112 may sign the enclave image file. To this end, the enclave image generation module 112 may use a private key ASYM_SIGN_ENCLAVE_PRIV, which may be from an asymmetrical key pair dedicated to signatures applied to enclave files generated by the enclave image generation module 112. This means that the enclave image generation module 112 may generate enclave image files for several functionalities of one or several HSMs 110 of the organization, to be executed in different enclaves of the cloud server 131 or of several cloud servers 131, and that the several enclave images files are signed using the same private key ASYM_SIGN_ENCLAVE_PRIV. The signature can therefore be verified using an associated public key ASYM_SIGN_ENCLAVE_PUB, that may be comprised in the certificate ORG_CA.

No restriction is attached to an asymmetric signature algorithm that is used by the enclave image generation module 112 to sign the enclave image file at step 202. For example, the asymmetric signature algorithm may be a state of the art signature algorithm, which is preferably quantum resistant, such as Elliptic Curve Digital Signature Algorithm, ECDSA, RSA Probabilistic Signature Scheme, RSA-PSS, Dilithium or another known signature algorithm.

At a step 203, the enclave image generation module 112 may transmit the signed enclave image file to the hypervisor 130 of the cloud enclave service 133, for execution in the cloud server 131.

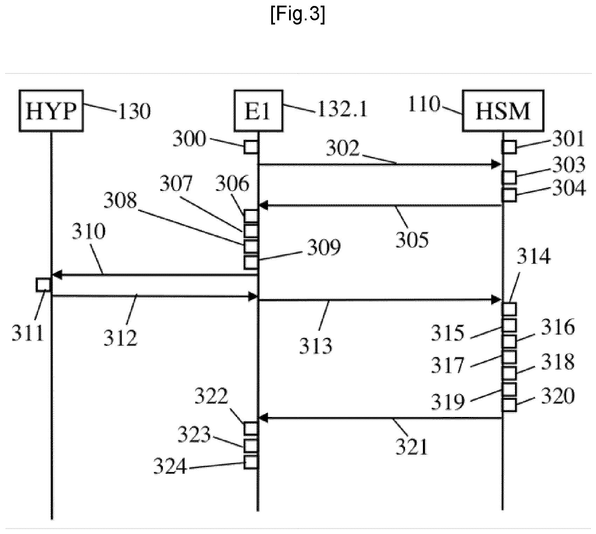

Once installed and executed in the first enclave 132.1 of the cloud server 131, the enclave image file triggers a bootstrapping phase of the method according to the invention. The bootstrapping phase is described in what follows referring to figure 3.

At a step 300, the public key ASYM_HSM_PUB comprised in the enclave image file is stored in the first enclave 132.1.

At a step 301, the associated private key ASYM_HSM_PRIV is securely stored by the HSM 110. The HSM may also store the public key ASYM_SIGN_ENCLAVE_PUB of the enclave image generation module 112 and a list of at least one enclave identifier belonging to the organization, including the identifier of the first enclave 132.1, which may be defined by the enclave image generation module 112 when generating the enclave image file.

At a step 302, when the bootstrapping phase is triggered after the first enclave image 132.1 is created based on the execution of the enclave image file, the first enclave 132.1 sends a request for a random (named random request in what follows) to the HSM 110.

Upon reception of the random request, the HSM 110 generates a random at a step 303.

At a step 304, the HSM 110 signs the random using the private key ASYM_HSM_PRIV of the HSM 110, to obtain a signed random.

At a step 305, the HSM 110 transmits the signed random to the first enclave 132.1.

At a step 306, upon reception of the signed random, the first enclave 132.1 may verify the signature of the random, using the public key ASYM_HSM_PUB retrieved at step 300. In case of negative verification at step 306, the bootstrapping phase may be interrupted. Else, in case of position verification of the signature of the random at step 306, the method goes on with step 307.

At step 307, the first enclave 132.1 seeds a Digital Random Number Generator, DRNG, of the first enclave 132.1 based on the random obtained at step 305.

At a step 308, the first enclave 132.1 generates its own cryptographic enclave key pair, using the DRNG obtained at step 307. The enclave key pair of the first enclave 132.1 comprises an enclave public key ASYM_ENCLAVE_PUB and an enclave private key ASYM_ENCLAVE_PRIV.

At a step 309, the first enclave 132.1 builds an attestation request comprising the enclave public key ASYM_ENCLAVE_PUB.

At a step 310, the first enclave 132.1 transmits the attestation request to the hypervisor 130.

At a step 311, the hypervisor 130 generates an attestation comprising the enclave public key ASYM_ENCLAVE_PUB, the attestation being signed by the hypervisor 130 (for example using a private key of the supervisor associated with a public key of a Root of Trust certificate, RoT, of the cloud service provider).

The attestation may further comprise:
- an identifier of the first enclave 132.1. The identifier of the first enclave 132.1 may be defined, during the building phase, by the enclave image generation module 112 and obtained by the hypervisor 130 upon reception of the enclave image file; and
- the signature of the enclave image file generated by the enclave image generation module 112 based on the private key ASYM_SIGN_ENCLAVE_PRIV.

The hypervisor 130 transmits the attestation to the first enclave 132.1 at a step 312.

At a step 313, the first enclave 132.1 forwards the attestation to the HSM 110.

Upon reception of the attestation, the HSM 110 may verify the attestation before generating a session key to be shared with the first enclave 132.1 as explained in what follows.

The verification of the attestation may comprise a first verification at step 314, during which the HSM 110 verifies the signature of the attestation based on the public key of the RoT of the cloud service provider.

The verification of the attestation may comprise a second verification at a step 315, during which the HSM 110 verifies that the enclave identifier included in the attestation matches with one of the enclave identifiers of the list of at least one enclave identifier belonging to the organization.

The verification of the attestation may comprise a third verification at a step 316, during which the HSM 110 verifies the signature of the enclave image file included in the attestation. The signature of the enclave image file is verified by the HSM 110 based on the public key ASYM_SIGN_ENCLAVE_PUBLIC, stored at step 301 previously described.

In the case where every performed verification of the attestation is positive, the method goes on with step 317. Else, the bootstrapping phase can be interrupted by the HSM 110.

At a step 317, the HSM generates a symmetric session key SYM_SESSION_KEY.

At step 318, the HSM 110 retrieves the enclave public key ASYM_ENCLAVE_PUB of the first enclave 132.1, that is included in the attestation.

At a step 319, the HSM 110 encrypts the symmetric session key SYM_SESSION_KEY using the enclave public key ASYM_ENCLAVE_PUB. No restriction is attached to the encryption scheme used to encrypt the symmetric session key SYM_SESSION_KEY.

At a step 320, the HSM 110 signs the encrypted symmetric session key using the HSM private key ASYM_HSM_PRIV of the HSM 110. No restriction is attached to the signature algorithm used to sign the encrypted symmetric session key.

At a step 321, the HSM 110 transmits the signed and encrypted symmetric session key to the first enclave 132.1.

At a step 322, upon reception of the signed and encrypted symmetric session key, the first enclave 132.1 checks the signature of the encrypted symmetric session key using the public key ASYM_HSM_PUB of the HSM 110.

At a step 323, the first enclave 132.1 decrypts the encrypted symmetric session key based on its own private key ASYM_ENCLAVE_PRIV, to obtain the symmetric session key SYM_SESSION_KEY.

At a step 324, the first enclave 132.1 stores the obtained symmetric session key SYM_SESSION_KEY.

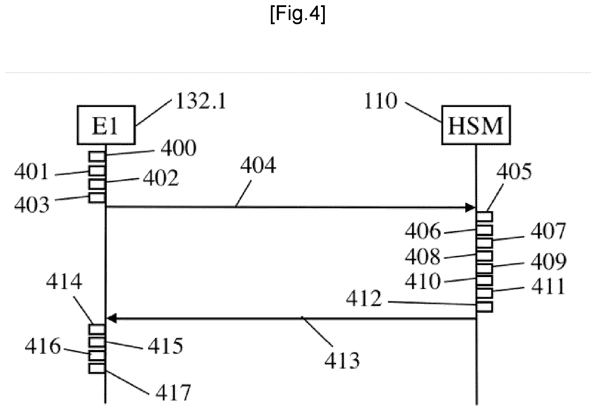

Therefore, the symmetric session key can be used for subsequent establishment of a secure communication session between the first enclave 132.1 and the HSM 110, in particular for a secure provisioning of data in the first enclave 132.1, as explained in what follows referring to figure 4.

Figure 4 shows the steps of a data provisioning phase of a method for securely provisioning data on the first enclave 132.1 of a cloud server 131, according to some embodiments of the invention.

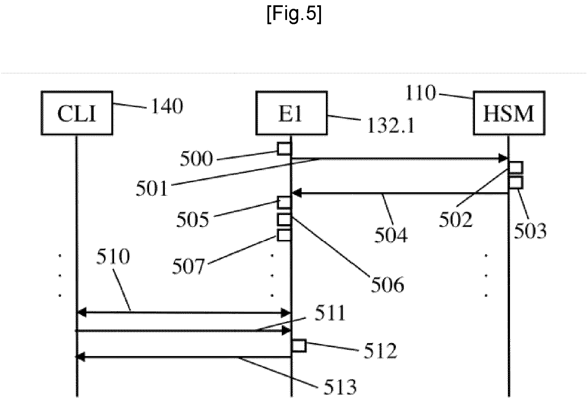

The data provisioning phase is implemented after the symmetric session key SYM_SESSION_KEY has been shared between the HSM 110 and the first enclave 132.1. Therefore, at the beginning of the data provisioning phase, the HSM 110 has verified that the first enclave 132.1 can be trusted, so that sensitive data can be securely provisioned into it. As previously explained, the sensitive data can comprise cryptographic keys, which can then be used to perform cryptographic computations for one or several clients 140, as explained in what follows referring to figure 5.

At a step 400, the first enclave 132.1 may generate a nonce. No restriction is attached to the format of the nonce, which may be a coded with N bytes for example, N being an integer, for example equal to 32.

At a step 401, the first enclave builds a data request, the data request comprising:
- information describing (called descriptive information) data requested by the first enclave 132.1. For example, the descriptive information can identify one or several cryptographic keys to be obtained from the HSM 110;
- optionally the nonce obtained at step 400;
- optionally a timestamp.

For example, the data request may be obtained by concatenating the descriptive information, the nonce and the timestamp.

According to some embodiments, steps 400 and 401 can be initiated by the first enclave when data is needed by the first enclave to provide a service to a client (instead of the service being provided by the HSM 110), for example when a cryptographic key stored in the HSM 110 is needed to perform a cryptographic computation by the first enclave 132.1 for the client 140.

At a step 402, the first enclave 132.1 may encrypt the data request using the symmetrical session key SYM_SESSION_KEY. No restriction is attached to the encryption algorithm used by the first enclave 132.1, which may be an Authenticated Encryption with Associated Data (AEAD) algorithm, such as AES-GCM for example (Advanced Encryption Standard - Galois Counter Mode).

At a step 403, the first enclave 132.1 may sign the encrypted data request using the symmetrical session key SYM_SESSION_KEY.

At a step 404, the first enclave 132.1 transmits the data request (encrypted and signed) to the HSM 110.

Upon reception of the data request, the HSM 110 verifies the signature of the encrypted data request, using the symmetrical session key SYM_SESSION_KEY, at a step 405.

In case of negative verification, the HSM 110 may interrupt the data provisioning phase.

In case of positive verification of the signature of the encrypted data request, the HSM 110 decrypts the encrypted data request at a step 406, based on the symmetrical session key SYM_SESSION_KEY, to obtain the data request in clear.

At a step 407, the HSM 110 may verify that the timestamp included in the data request is inside a time range, for example may verify that the difference between a current instant and the timestamp is below a predefined threshold.

In case of positive verification (if the timestamp is inside the time range), the method goes further with step 408. Else, if the timestamp is outside the time range (the difference between the current instant and the timestamp is greater than the predefined threshold), the data provisioning phase may be interrupted. This enables to protect the HSM 110 and associated first enclave 132.1 against replay attacks.

At step 408, the HSM 110 processes the payload of the data request, i.e. the descriptive information about requested data.

At a step 409, the HSM 110 obtains data corresponding to the descriptive information in the data request. In the example described here, the data may be one or several cryptographic keys requested by the first enclave 132.1, to perform cryptographic computations in the first enclave 132.1.

At a step 410, the HSM 110 builds a response to the data request, the response comprising the data and the nonce (if the data request comprises a nonce).

At a step 411, the HSM 110 encrypts the response using the symmetrical session key SYM_SESSION_KEY. The encryption algorithm may be identical to the encryption algorithm used by the first enclave 132.1 at step 402 previously described.

At a step 412, the HSM 110 may sign the encrypted response using the symmetrical session key SYM_SESSION_KEY.

At a step 413, the HSM 110 transmits the response (encrypted and preferably signed) to the first enclave 132.1.

Upon reception of the response, the first enclave 132.1 verifies the signature of the response, using the symmetrical session key SYM_SESSION_KEY. In case of negative verification, the first enclave 132.1 may interrupt the data provisioning phase.

In case of positive verification, the first enclave 132.1 decrypts the encrypted response using the symmetrical session key SYM_SESSION_KEY and can therefore access to the data comprised in the response.

At a step 416, the first enclave 132.1 may verify the nonce included in the response, for example by comparing it to the nonce included in the data request. If the nonce included in the response is identical to the nonce included in the data request, the method goes on with step 417. Else, the data provisioning phase may be interrupted. Verifying the nonce enables to ensure that the response is corresponding to the data request previously transmitted by the first enclave 132.1.

At a step 417, the first enclave 132.1 may securely store the data comprised in the response, for further use. For example, the data can be used to deliver a service to the client 140, as explained in what follows referring to figure 5.

Figure 5 shows the steps of a service delivery phase, based on data provisioned in the first enclave 132.1, of a method for securely provisioning data in an enclave according to some embodiments of the invention.

The first enclave 132.1, based on the data provisioned by the HSM 110 in the data provisioning phase described above, may deliver a service to the client 110.

Before delivering the service, the first enclave may retrieve a Transport Layer Security pair of keys from the HSM 110.

To this end, at a step 500, the first enclave 132.1 generates a TLS keypair request.

At a step 501, the TLS keypair request is transmitted to the HSM 110 at a step 110. The TLS keypair request can be encrypted and/or signed using the symmetrical session key before being transmitted to the HSM.

Upon reception of the TLS keypair request, the HSM 110 retrieves the TLS keypair and encrypts the TLS keypair at step 502 using the symmetrical session key SYM_SESSION_KEY. Before retrieving the TLS keypair, the HSM may verify the signature and decrypts the TLS keypair request, if it is signed and encrypted.

At a step 504, the HSM 110 may sign the encrypted TLS keypair using the symmetrical session key SYM_SESSION_KEY.

At a step 505, the HSM 110 transmits the encrypted and signed TLS keypair to the first enclave 132.1.

Upon reception of the encrypted and signed TLS keypair, the first enclave 132.1 may verify the signature of the encrypted TLS keypair, using the symmetrical session key SYM_SESSION_KEY, at a step 505.

In case of negative verification, retrieval of the TLS keypair by the first enclave 132.1 may be interrupted.

In case of positive verification of the signature of the encrypted TLS keypair, the first enclave 132.1 decrypts the encrypted TLS keypair using the symmetrical session key SYM_SESSION_KEY, at a step 506.

At a step 507, the first enclave 132.1 may start a TLS application server using the obtained TLS keypair and the certificate ORG_CA that was included in the enclave image file, as parameters of the TLS application server.

Steps 500 to 507 may be performed during the bootstrapping stage, once the symmetrical session key SYM_SESSION_KEY has been obtained by the first enclave 132.1, at step 324 previously described.

After the TLS application server is started, the client 140 can establish a TLS session with the first enclave 132.1 at a step 510, using mutual authentication between the client 140 and the first enclave 132.1.

Once the TLS session is established, the client 140 may send a service request to the first enclave 132.1, requesting a service to be delivered based on data provisioned in the first enclave 132.1. For example, the service may comprise cryptographic computation based on at least one cryptographic key provisioned in the first enclave 132.1 (or to be provisioned in the first enclave 132.1).

At a step 512, the first enclave 132.1 determines a service response to the service request, based on data previously provisioned from the HSM 110 in the first enclave 132.1. The service response can for example comprise a result of a cryptographic computation performed using at least one cryptographic key comprised in the first enclave 132.1.

If, upon receiving of the service request at step 511, the first enclave 132.1 already stores the data necessary to determine the service response to the service request, then step 512 can be performed directly after step 511.

However, if, upon receiving of the service request at step 511, the first enclave 132.1 does not store the data necessary to determine the response to the service request, the first enclave 132.1 generates a data request in conformity with step 401 previously described (the data request comprising information describing the data to be obtained from the HSM 110, to determine the service response to the service request). In that situation, steps 400 to 417 are performed between step 511 and 512.

At a step 513, the service response to the service request determined at step 512 is returned to the client 140, and delivery of the service is therefore achieved. Alternatively, the client 140 may send several service requests during the same TLS session.

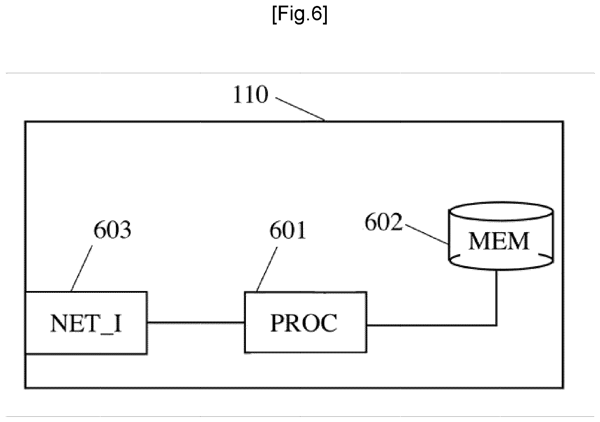

Figure 6 shows the structure of a security module 110 according to some embodiments of the invention.

The security module 110 comprises a processor 601 and a memory 602.

The processor 601 may comprise one or multiple microprocessors, a Central Processing Unit (CPU), on a single Integrated Circuit (IC) or several IC chips.

No restriction is attached to the memory 602, which may be any non-transient, tangible form of memory. For example, it can comprise ROM, RAM, EEPROM and/or flash memory. The processor 601 may be programmable and may be configured to execute instructions that are stored in its internal memory or to execute instructions that are stored in the memory 602.

The memory 602 may securely store data, which can be provisioned, in part or totally, in an enclave of a cloud server, as previously explained.

The memory 602 can store instructions for implementing the steps 301, to 305, 313 to 321, 404 to 413 and 501 to 504 described above.

The security module further may comprise a network interface 603, such as an IP interface for communicating with first enclave 132.1 through IP network 100.

The embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method of securely provisioning data from a security module (110) to an enclave (132.1) of a cloud server (110) via a telecommunications network (100), the method comprising the following steps:
- verifying (314-316) an attestation received from the enclave, the attestation comprising an enclave public key associated with the enclave;
- in case of positive verification of the attestation, generating (317) a session key;
- encrypting (319) the session key using the enclave public key;
- transmitting (321) the encrypted session key to the enclave;
wherein the method further comprises:
- encrypting (411) data stored in the security module using the session key;
- transmitting (413) the encrypted data to the enclave.

2. The method according to claim 1, wherein the data comprises at least one cryptographic key stored in the security module (110).

3. The method according to claims 1 or 2, further comprising:
- receiving (404) an encrypted data request from the enclave (132.1);
- decrypting (406) the encrypted data request using the session key;
- retrieving (409) data stored in the security module (110) based on the data request, wherein the data retrieved is encrypted using the session key and transmitted to the enclave in a response to the data request.

4. The method according to claim 3, wherein the data request further comprises a nonce, and wherein the security module (110) generates (410) the response comprising the nonce and the retrieved data, encrypts (411) the response using the session key and transmits (413) the encrypted response to the enclave.

5. The method according to claim 3 or 4, wherein the data request comprises a timestamp, wherein the security module verifies (407) that the timestamp is inside a time range before transmitting the response to the enclave (132.1).

6. The method according to one of the preceding claims, wherein verifying (314-316) the attestation comprises one or several of the following verifications:
- verifying (314) a signature of the attestation based on a root of trust certificate associated with an entity related to the cloud server (131);
- verifying (315) that an enclave identifier included in the attestation is comprised in an identifier list stored in the security module (110); and
- verifying (316) a signature of an enclave image file comprised in the attestation.

7. The method according to one of the preceding claims, wherein the security module (110) signs (320) the encrypted session key using a private key of the security module, before transmitting the encrypted session key to the enclave (132.1).

8. The method according to one of the preceding claims, further comprising:
- receiving (501) a Transport Layer Security, TLS, keypair request from the enclave;
- retrieving a TLS keypair;
- encrypting (502) the TLS keypair using the session key;
- transmitting (504) the encrypted TLS keypair to the enclave.

9. The method according to one of the preceding claims, further comprising before receiving (313) the attestation:
- receiving (302) a random request from the enclave (132.1);
- generating (303) a random by the security module (110);
- signing (304) the random using a private key of the security module, and
- transmitting (305) the signed random to the enclave.

10. The method according to claim 9, wherein the enclave (132.1) seeds (307) a random number generator based on the random; and wherein the enclave generates (308) an enclave asymmetrical key pair based on the random number generator, the asymmetrical key pair comprising the enclave public key.

11. The method according to one of the preceding claims, wherein, upon reception (321) of the encrypted session key, the enclave (132.1) decrypts (322) the encrypted session key based on an enclave private key associated with the enclave; wherein, upon reception (413) of the encrypted data, the enclave decrypts (414) the encrypted data based on the session key;
wherein the method further comprises:
- receiving (511) a service request, by the enclave, from a client (140);
- determining (512) a service response to the service request, based on the decrypted data;
- transmitting (513) the service response to the client.

12. The method according to claim 2 and 11, wherein the service request requests a cryptographic computation based on the cryptographic key;
wherein the enclave (132.1) performs (512) the cryptographic computation based on the cryptographic key; and
wherein the service response comprises a result of the cryptographic computation.

13. The method according to claim 8 and to claim 11 or 12, wherein the enclave (132.1) establishes (510) a TLS session with the client (140) using the TLS keypair, and wherein the service request is received (511) by the enclave during the TLS session.

14. A computer program comprising instructions arranged for implementing the method according to one of claims 1 to 9, when said instructions are executed by a processor (601).

15. A security module (110) comprising a network interface (603) configured for accessing a telecommunications network (100), and a processor (601) configured for:
- verifying an attestation received from an enclave (132.1) of a cloud server (131), via the telecommunications network, the attestation comprising an enclave public key associated with the enclave;
- in case of positive verification of the attestation, generating a session key;
- encrypting the session key using the enclave public key;
- transmitting the encrypted session key to the enclave via the network interface and the telecommunications network;
wherein the processor is further configured for :
- encrypting data stored in the security module using the session key;
- transmitting the encrypted data to the enclave via the network interface and the telecommunications network.
